# EUROPÄISCHE PATENTSCHRIFT

(11) **EP 2 399 457 B1**
(45) Veröffentlichungstag und Bekanntmachung des Hinweises auf die Patenterteilung: **27.04.2016**
(21) Anmeldenummer: 10167351.5
(22) Anmeldetag: 25.06.2010
(51) Int. Cl.: A01N 1/02

(54) **Zahnbank**
Tooth bank
Banque dentaire

(43) Veröffentlichungstag der Anmeldung: 28.12.2011
(73) Patentinhaber: Nolte, Dirk, 82061 Neuried (DE)
(72) Erfinder: Nolte, Dirk, 82061 Neuried (DE)
(74) Vertreter: Weickmann & Weickmann PartmbB

(56) Entgegenhaltungen:
- US-A- 3 983 712
- OH ET AL: "Cryopreservation of human teeth for future organization of a tooth bank-A preliminary study", CRYOBIOLOGY, ACADEMIC PRESS INC, US LNKD- DOI:10.1016/J.CRYOBIOL.2005.08.008, Bd. 51, Nr. 3, 1. Dezember 2005 (2005-12-01), Seiten 322-329, XP005197442, ISSN: 0011-2240
- IZUMI ET AL: "Periodontal regeneration of transplanted rat teeth subcutaneously after cryopreservation", INTERNATIONAL JOURNAL OF ORAL AND MAXILLOFACIAL SURGERY, COPENHAGEN, DK LNKD- DOI:10.1016/J.IJOM.2007.06.003, Bd. 36, Nr. 9, 14. September 2007 (2007-09-14), Seiten 838-844, XP022237584, ISSN: 0901-5027
- SCHWARTZ O ET AL: "Cryopreservation before replantation of mature teeth in monkeys", INTERNATIONAL JOURNAL OF ORAL SURGERY, MUNKSGAARD, COPENHAGEN, DK, Bd. 14, Nr. 4, 1. August 1985 (1985-08-01) , Seiten 350-361, XP025650433, ISSN: 0300-9785 [gefunden am 1985-08-01]
- SCATCHARD G; BATCHELDER A C; BORWN A: "CHEMICAL, CLINICAL, AND IMMUNOLOGICAL STUDIES ON THE PRODUCTS OF HUMAN PLASMA FRACTIONATION. VI. THE OSMOTIC PRESSURE OF PLASMA AND OF SERUM ALBUMIN", THE JOURNAL OF CLINICAL INVESTIGATION, Bd. 23, Nr. 4, 1. Juli 1944 (1944-07-01), Seiten 458-464, XP002604417, DOI: 10.1172/JCI101513
- SIGMA ALDRICH: 'Medium 199', [Online] 01 Januar 2011, Seiten 1 - 3, XP055033317 Gefunden im Internet: <URL:http://www.sigmaaldrich.com/life-scien ce/cell-culture/classical-media-salts/mediu m-199.html> [gefunden am 2012-07-19]
- INVITROGEN: 'DMEM Dulbecco's Modified Eagle Media', [Online] 06 Juni 2005, Seiten 1 - 3, XP055033335 Gefunden im Internet: <URL:http://tools.invitrogen.com/content/sf s/productnotes/F_DMEM -RD-MKT-TL-HL050602.pdf> [gefunden am 2012-07-19]
- SCHWARTZ ET AL: "Cryopreservation as long-term storage of teeth for transplantation or replantation", INTERNATIONAL JOURNAL OF ORAL AND MAXILLOFACIAL SURGERY, COPENHAGEN, DK, vol. 15, no. 1, 1 February 1986 (1986-02-01), pages 30-32, XP027294136, ISSN: 0901-5027 [retrieved on 1986-02-01]

## Beschreibung

Die vorliegende Erfindung betrifft die Kryopräservation von Zähnen, insbesondere um die Zähne zu einem späteren Zeitpunkt wieder als Kaueinheit verfügbar zu machen. Die Erfindung betrifft weiterhin eine Zahnbank, in der kryopräservierte Zähne gelagert werden.

Der Verlust von Zähnen hat für einen Patienten sowohl funktionelle als auch ästhetische Beeinträchtigungen zur Folge. Verloren gegangene Zähne können durch enossale Zahnimplantate, z.B. aus Titan, ersetzt werden. Während solche enossale Zahnimplantate eine gute Prognose aufweisen, sind sie aber teuer, nur für Erwachsene geeignet und besitzen insbesondere kein osteoinduktives Potenzial. Insbesondere bei einer vorhandenen Schädigung des Knochens ist ein Ersatz eines verlorenen Zahnes durch ein enossales Implantat aus Titan oftmals nur nach aufwändigen Knochen aufbauenden Maßnahmen oder überhaupt nicht mehr möglich.

Eine demgegenüber oftmals vorteilhafte Alternative kann eine Zahntransplantation, insbesondere eine autologe oder autogene Zahntransplantation, darstellen. Dabei wird dem Patienten ein natürlicher Zahn und nicht ein künstliches Implantat eingesetzt. Die autologe oder autogene Transplantation schafft ausgezeichnete Verhältnisse für die Ausbildung des Weichgewebes sowie des lokalen Knochens. Die für eine autologe oder autogene Transplantation benötigten Transplantate, insbesondere Milcheckzähne, Prämolaren oder Weisheitszähne, stehen jedoch nur in einem bestimmten Zeitfenster zur Verfügung. Ein Zahnverlust fällt also zeitlich nur höchst selten mit der Entfernung eines möglichen Transplantats zusammen. Vielmehr werden zahlreiche, eigentlich als Transplantat geeignete Zähne, die zu einem späteren Zeitpunkt einen nicht mehr erhaltungsfähigen Zahn ersetzen könnten, entfernt und entsorgt.

Mittels Kryopräservation können solche Zähne über Jahre konserviert und später, falls erforderlich, zum Ersatz eines anderen Zahnes am gleichen Patienten wieder aufgetaut und transplantiert werden.

Oh et al., Cryobiology 51 (2005) 322-329, beschreibt eine Studie zur Kryopräservation von humanen Zähnen mit dem Ziel, eine Zahnbank aufzubauen. Oh et al. lehrt, dass eine Temperatur von unterhalb -130 °C für erforderlich gehalten wird und eine tatsächliche Lagertemperatur von -196 °C verwendet wurde.

Izumi et al., Int. J. Oral Maxillofac. Surg. 2007 (36) 838-844, beschreibt die Kryopräservation von extrahierten humanen Zähnen bei -152 °C.

O. Schwartz et al., Int. J. Oral Surg. 1985 (14) 350-361 beschreibt die Kryopräservation von Zähnen Grüner Meerkatzen. Die Lagerung der Zähne wurde in flüssigem Stickstoff bei -196 °C durchgeführt.

US 3,983,712 beschreibt ein Verfahren zur Präservation von extrahierten Zähnen. Die Lagerung der Zähne erfolgt in flüssigem Stickstoff bei einer Temperatur von -196 °C.

O. Schwartz, Int. J. Oral Maxillofac. Surg. 1986 (15) 30-32, beschreibt die Kryopräservation zur Langzeitlagerung von Zähnen. Die Lagerung der Zähne erfolgt in flüssigem Stickstoff bei -196 °C.

Derzeit ist für eine Einlagerung von Zähnen eine Kryopräservation in flüssigem Stickstoff bei -196 °C notwendig, um die Zähne über die benötigten langen Zeiträume von mehreren Jahren zu konservieren. Eine Lagerung in flüssigem Stickstoff bei -196 °C erfordert aber eine aufwändige Logistik mit hohem finanziellen Aufwand, beispielsweise für die Bereitstellung der Flüssigstickstofftanks sowie der Ausgestaltung des Lagerungsequipments. Eine Vorbereitung zur Lagerung bzw. eine Lagerung selbst in flüssigem Stickstoff ist deshalb in den meisten Zahnarztpraxen nicht möglich. Zudem kann bei Lagerung bei solchen tiefen Temperaturen über einen langen Zeitraum eine Schädigung der Zahnhartsubstanz nicht ausgeschlossen werden.

Eine Aufgabe der vorliegenden Erfindung war es deshalb, ein Verfahren bereitzustellen, mit dem Zähne mit geringerem Aufwand über lange Zeit konserviert werden können.

Diese Aufgabe wird erfindungsgemäß gelöst durch ein Verfahren zur Kryopräservation von Zähnen umfassend die Schritte (i) Versetzen des Zahns mit einem Medium, welches ein Antibiotikum, ein Kryoprotektant, Serumproteine und einen Puffer umfasst, (ii) Einfrieren und (iii) Lagern des eingefrorenen Zahns bei einer Temperatur von -20 °C bis -88 °C.

Erfindungsgemäß wurde festgestellt, dass durch Versetzen des zu kryopräservierenden Zahns mit einem bestimmten Medium ein Lagern bereits bei einer relativ hohen Temperatur von -20 °C bis -88 °C möglich ist und nicht, wie bisher für erforderlich gehalten, eine Lagerung bei einer Temperatur von -196 °C nötig ist. Dadurch kann der apparative Aufwand und somit die Kosten für die Kryopräservation deutlich verringert werden. Auf diese Weise ist es möglich, eine Zahnbank in großem Umfang für viele Patienten bereitzustellen. Auch ist eine Entnahme von Zähnen beziehungsweise eine Reimplantation von Zähnen auch in Zahnarztpraxen, insbesondere in privaten Zahnarztpraxen, möglich, da eine Handhabung bei Temperaturen bis -88 °C apparativ auch von solchen Einheiten bewerkstelligt werden kann. Damit wird erfindungsgemäß allen Fachgebieten der Zahnmedizin, beispielsweise dem Zahnarzt, dem Oralchirurgen, dem Mund-Kiefer-Gesichtschirurgen und auch der Kieferorthopädie die Möglichkeit an die Hand gegeben, Zähne ihrer Patienten bei Bedarf zu entnehmen oder/und zu einem späteren Zeitpunkt wieder zu verwenden.

Ein wesentlicher Aspekt der vorliegenden Erfindung ist der Einsatz eines speziellen Mediums. Dieses Medium umfasst erfindungsgemäß wenigstens ein Antibiotikum. Es wurde festgestellt, dass bei Einsatz eines Antibiotikums es praktisch zu keinem Bakterienwachstum während der Lagerung kommt. Durch Einsatz eines Antibiotikums kann somit selbst bei relativ hohen Temperaturen eine Lagerung über einen langen Zeitraum erfolgen, ohne dass an den Zahnpräparaten anhaftende Zellen durch Bakterien zerstört würden.

Vorzugsweise wird als Antibiotikum Penicillin, Cephaloridin, Gentamycin oder/und Streptomycin verwendet. Die Konzentration des eingesetzten Antibiotikums beträgt vorzugsweise mindestens 10 µg/ml, insbesondere mindestens 100 µg/ml, mehr bevorzugt mindestens 500 µg/ml und vorzugsweise bis zu 10 mg/ml, mehr bevorzugt bis zu 5 mg/ml und am meisten bevorzugt bis zu 2 mg/ml.

Das Einfriermedium umfasst erfindungsgemäß weiterhin ein Kryoprotektant. Geeignete Kryoprotektanten sind beispielsweise Glycerin oder DMSO (Dimethylsulfoxid), wobei DMSO bevorzugt ist. Es wurde festgestellt, dass unter Verwendung von DMSO als Kryoprotektant insbesondere PDM-Zellen während der Lagerung intakt blieben. Die Menge an Kryoprotektant in der Einfrierlösung beträgt vorzugsweise 2 bis 20 % (jeweils bezogen auf das Gewicht), vorzugsweise 5 bis 15 Gew.-%, insbesondere 8 bis 12 Gew.-% und besonders bevorzugt 10 Gew.-%.

Das erfindungsgemäß eingesetzte Einfriermedium umfasst weiterhin Serumproteine, insbesondere humanes Serumalbumin oder/und Kälberserum. Der Anteil an Serumproteinen beträgt vorzugsweise mindestens 5 Gew.-%, insbesondere mindestens 10 Gew.-% und mehr bevorzugt mindestens 15 Gew.-% (jeweils bezogen auf das Gewicht) und vorzugsweise bis zu 30 Gew.-%, insbesondere bis zu Gew.-25 % und mehr bevorzugt bis zu 22 Gew.-%. In einer besonders bevorzugten Ausführungsform enthält die Einfrierlösung 20 Gew.-% Serumproteine. Das Serum wird vorzugsweise Hitze-inaktiviert. Bei Verwendung von humanem Serum, insbesondere humanem Serumalbumin, kann eine weitere Sicherheit für den Patienten erreicht werden und mögliche Risiken, beispielsweise im Hinblick auf die BSE-Problematik, vollständig ausgeschlossen werden.

Die Zugabe von Serumproteinen ist aus onkotischen Gründen vorteilhaft. Durch Serumproteine wird ein Hineindiffundieren von Wasser in die Zellen des Zahns verhindert, welches ansonsten zu einer Zellschwellung oder Zellstörung führen könnte.

Die erfindungsgemäße Einfrierlösung umfasst weiterhin einen Puffer. Ein geeigneter Puffer ist zum Beispiel ein Natriumbicarbonatpuffer. Die Menge an Puffer, insbesondere Natriumbicarbonat, beträgt vorzugsweise mindestens 3 Gew.-%, mehr bevorzugt mindestens 4 Gew.-% und insbesondere 4,4 Gew.-% und vorzugsweise bis zu 6 Gew.-%, insbesondere bis zu 4,5 Gew.-%.

Das Einfriermedium kann zusätzlich zu den oben genannten notwendigen Bestandteilen weitere optionale Bestandteile enthalten. So wird vorzugsweise ein herkömmliches Grundmedium eingesetzt, beispielsweise Medium 199. Weiterhin kann das Einfriermedium ein oder mehrere Fungizide enthalten, die ein Pilzwachstum verhindern. Ein geeignetes Fungizid ist beispielsweise Amphotericin B. Das Fungizid wird vorzugsweise in einer Menge von mindestens 50 µg/ml, mehr bevorzugt mindestens 100 µg/ml und vorzugsweise bis zu 2000 µg/ml eingesetzt. Weitere geeignete Zusatzstoffe für die Einfrierlösung sind beispielsweise Cortison, insbesondere Hydrocortison, oder/und Tetracyclin. Durch diese Zusatzstoffe wird ein weiterer Zellschutz und eine antiresorptive Wirkung auf die Zahnwurzel erzielt.

Erfindungsgemäß besonders bevorzugt ist, dass der Zahn zusammen mit dem Pulpeninhalt kryopräserviert wird. Es erfolgt also erfindungsgemäß bevorzugt keine vorherige Entfernung des Pulpeninhalts. Erfindungsgemäß wurde nämlich festgestellt, dass das Pulpengewebe durch die Kryopräservation erhalten wird und dass diese Stammzellen mit den in ihnen enthaltenen Proteinen nach Replantation ein osteoinduktives Potenzial für die Wiedereinheilung haben. Das pulpale Gewebe, welches am beziehungsweise im Zahn verbleibt, kann somit für den initialen Einheilprozess eine zentrale Funktion einnehmen. Bei der erfindungsgemäßen Vorgehensweise können die Dentin- und Knochenneubildenden Eigenschaften von DPSL-Zellen benutzt werden.

Es ist erfindungsgemäß aber auch möglich, zunächst den Pulpeninhalt ganz oder teilweise zu entfernen und den Zahn ohne oder nur mit Teilen des Pulpeninhaltes zu kryopräservieren.

In Schritt (ii) des erfindungsgemäßen Verfahrens wird der zu konservierende Zahn eingefroren.

Das Einfrieren kann durch einfache Abkühlung des Zahns auf die gewünschte Lagertemperatur erfolgen. Für den Fall, dass die Lagertemperatur im Bereich von -20 °C bis -50 °C, insbesondere im Bereich von -20 °C bis -40 °C liegen soll, erfolgt das Einfrieren bevorzugt mit einer langsamen Abkühlrate, insbesondere mit einer Abkühlrate von -0,5 °C bis -2 °C pro Minute bis zur gewünschten Lagertemperatur.

Für den Fall, dass die Lagertemperatur im Bereich von kleiner als -50 °C bis -88 °C liegen soll, wird der Einfrierprozess erfindungsgemäß bevorzugt in wenigstens zwei Stufen durchgeführt. In einer ersten Stufe wird zunächst mit einer langsamen Abkühlrate, insbesondere mit einer Abkühlrate von -0,5 °C bis -2 °C pro Minute bis zu einer Temperatur im Bereich von -30 °C bis -50 °C, insbesondere bis zu einer mittleren Temperatur von -40 °C abgekühlt. In einer zweiten Stufe wird von da ab, z.B. von -40 °C bis zur gewünschten Lagertemperatur mit einer höheren Abkühlungsrate, insbesondere mit einer Abkühlrate von -4 °C bis -8 °C pro Minute, insbesondere von -6 °C pro Minute, gekühlt.

Eine weitergehende Abkühlung auf eine Temperatur unterhalb der vorgesehenen Lagertemperatur ist erfindungsgemäß nicht vorgesehen.

Das Einfrieren und die anschließende Lagerung in Schritt (iii) des erfindungsgemäßen Verfahrens erfolgt bei einer Temperatur im Bereich von -20 °C bis -88 °C, mehr bevorzugt von -40 °C bis -88 °C, noch mehr bevorzugt von -70 °C bis -86 °C, insbesondere bei einer Temperatur von -75 °C bis -85 °C und bevorzugt bei einer Temperatur von -80 °C bis -82 °C. Während auch bei relativ hohen Temperaturen ein Einlagern über lange Zeiträume möglich ist, kann ein Einfrieren und Lagern bei relativ hohen Temperaturen, z.B. von -20 °C bis -50 °C, insbesondere dann vorgesehen werden, wenn eine Einlagerung für einen kurzen Zeitraum, z.B. 1 bis 4 Wochen, insbesondere 1 bis 2 Wochen, geplant ist. Ein Einlagern bei solchen hohen Temperaturen, insbesondere von -20 °C bis -50 °C, bevorzugt von -20 °C bis -40 °C, ist besonders bei relativ schnell indizierten Transplantationen vorteilhaft. Eine solche Vorgehensweise kann zum Beispiel eingesetzt werden, wenn ein Zahn bei erheblicher knöcherner Entzündung im Bereich der Zahnwurzel entfernt wird und der Zahn dann transplantiert wird, wenn die knöcherne Entzündung zurückgegangen ist.

Erfindungsgemäß wurde festgestellt, dass durch Verwendung der speziellen Einfrierlösung gemäß Schritt (i) eine stabile Lagerung bei diesen hohen Temperaturen möglich ist. Die bisher für erforderlich gehaltene Lagerung in flüssigem Stickstoff bei -196 °C wird erfindungsgemäß nicht benötigt. Vielmehr kommt es bei den erfindungsgemäßen Bedingungen praktisch zu keinem Bakterienwachstum, wie in zahlreichen Proben bestätigt. Neben den geringeren apparativen Anforderungen ist ein Einfrieren und eine Lagerung bei einer Temperatur von -20 °C bis -88 °C, insbesondere von -70 °C bis -86 °C auch dahingehend vorteilhaft, dass die Gefahr von Zahnhartsubstanzschäden bei solch hohen Temperaturen geringer ist als bei tieferen Temperaturen von beispielsweise -196 °C. Bei tieferen Temperaturen nimmt die Eisdichte und damit die Kristallisationspunktbildung in der Hartsubstanz zu und damit auch die Druckbildung auf die Hartsubstanz.

Das erfindungsgemäße Verfahren ist somit gegenüber einem Einfrieren auf -196 °C unter anderem dahingehend vorteilhaft, dass Schäden an der Zahnhartsubstanz vermieden werden bei gleichzeitigem Erhalt der Vitalität von Pulpa und PDL.

Die Lagerung des eingefrorenen Zahns erfolgt erfindungsgemäß bevorzugt für mindestens eine Woche, insbesondere für mindestens drei Monate, mehr bevorzugt für mindestens ein Jahr, noch mehr bevorzugt für mindestens fünf Jahre. Je nach Bedarf können die Zähne aber auch noch länger eingefroren werden, beispielsweise für mehr als 10, mehr als 20 oder für mehr als 50 Jahre. Für ein Einfrieren für mindestens drei Monate oder länger wird vorzugsweise eine Lagertemperatur von kleiner als -50 °C, insbesondere kleiner als -70 °C gewählt.

Das erfindungsgemäße Verfahren ist insbesondere zur Kryopräservierung von humanen Zähnen geeignet. Dabei wird eine hohe Regenerationskraft, insbesondere aufgrund der intakt bleibenden PDL- und DPSL-Zellen erreicht. Obwohl humane Zähne auf Abrieb nicht wieder nachwachsen, wie dies beispielsweise bei Nagerzähnen der Fall ist, konnte erfindungsgemäß eine hohe Regenerationskraft erzielt werden.

Die erfindungsgemäß kryopräservierten Zähne sind insbesondere zur autogenen oder autologen Replantation vorgesehen. Dies bedeutet, dass die eingelagerten Zähne demselben Individuum, dem sie entnommen wurden, später wieder replantiert werden. Die autogene Zahntransplantation weist eine 10-Jahres-Erfolgsrate von 84 % auf.

Das erfindungsgemäße Verfahren zur Kryopräservation von Zähnen ermöglicht es, die einem Individuum entnommenen Zähne zu einem späteren Zeitpunkt für dasselbe Individuum wieder als Kaueinheit verfügbar zu machen. Mit dem erfindungsgemäßen Verfahren ist es möglich, die Zähne über einen praktisch unbegrenzten Zeitraum zu lagern und bei Bedarf wieder zu verwenden. Durch die Präservationstechnik bewahren die Zähne ihre biologische Funktion als Kauelemente und insbesondere ihre biologischen Eigenschaften, das Knochenwachstum im selben Individuum zu induzieren.

Das erfindungsgemäße Verfahren eignet sich insbesondere zur Erstellung einer Zahnbank, welches wenigstens einen eingefrorenen und erfindungsgemäß kryopräservierten Zahn umfasst. Die Besonderheit der erfindungsgemäßen Zahnbank liegt in der Zusammensetzung der Einfrierlösung, welche insbesondere wenigstens ein Antibiotikum umfasst, sowie in der Lagerung bei -20 °C bis -88 °C, insbesondere bei -70 °C bis -86 °C. Die in der erfindungsgemäßen Zahnbank gelagerten Zähne sind vorzugsweise ausschließlich zur autologen oder autogenen Replantation vorgesehen.

Das erfindungsgemäße Verfahren kann durch weitere Verfahrensschritte ergänzt werden. So wird beispielsweise bevorzugt zunächst ein Zahn von einem Individuum entfernt. Die Entfernung des Zahns kann beispielsweise durch Osteotomie erfolgen. Bei der Entfernung des Zahns ist darauf zu achten, dass die Zahnoberfläche nicht verletzt wird. So würde beispielsweise eine grobe Verletzung der Wurzeloberfläche bedeuten, dass das Transplantat für eine weitere Kryopräservation kaum mehr Verwendung finden könnte. Vorzugsweise handelt es sich bei den entfernten Zähnen um Milchzähne oder um Weisheitszähne. Weisheitszähne können Reservezähne für die seitlichen Molaren darstellen. Allerdings können sowohl Milchzähne als auch Weisheitszähne nur zu einem bestimmten Zeitpunkt gewonnen werden. Für die Weisheitszähne umschließt dieser Zeitraum das Alter von 14 bis 20 Jahren des Patienten, in dem die Weisheitszähne ohne größere Traumatisierung entfernt werden können, um nach einer erfindungsgemäßen Kryopräservation zu einem späteren Zeitpunkt als Reservezähne für die oberen oder unteren Molaren wieder eingesetzt zu werden.

Der Zahn wird bevorzugt zusammen mit dem Pulpeninhalt bereitgestellt.

Der entfernte Zahn wird vorzugsweise mit einer Lösung gewaschen, beispielsweise mit einer physiologischen Kochsalzlösung abgespült. Besonders bevorzugt wird der Zahn mit 0,9 %-iger steriler NaCl-Lösung gespült.

Im Weiteren werden die Zähne bevorzugt in eine Transportlösung (Lösung Nr. I) gegeben. Dabei wird der Zahn bevorzugt in ein Röhrchen gegeben, auf welches die zur Einlagerung in der Datenbank vorgesehenen Beschriftungen aufgebracht werden, wie beispielsweise Initialen von Nachname und Vorname, Geburtsdatum, Zahnnummern, fortlaufende Zahnbanknummer sowie Tag der Einlagerung im Gefrierschrank.

Die Transportflüssigkeit (Lösung Nr. I) umfasst vorzugsweise einen Puffer oder/und mindestens ein Antibiotikum. Besonders bevorzugt umfasst die Transportflüssigkeit weiterhin Serumproteine, insbesondere humanes Serumalbumin oder Kälberserum, vorzugsweise in einer Menge von 5 bis 20 Gew.-%, mehr bevorzugt 8 bis 12 Gew.-% und am meisten bevorzugt 10 Gew.-%. Die Transportflüssigkeit umfasst weiterhin vorzugsweise einen Puffer, insbesondere Natriumbicarbonat, und zwar bevorzugt in einer Menge von 3 bis 10 Gew.-%, insbesondere von 4 bis 6 Gew.-%. Geeignete Antibiotika, die in der Transportlösung enthalten sein können, sind beispielsweise Penicillin, Cephaloridin sowie Gentamycin. Der Gehalt an Antibiotika in der Transportlösung beträgt vorzugsweise mindestens 100 µg/ml, mehr bevorzugt mindestens 500 µg/ml und noch mehr bevorzugt mindestens 1 µg/ml und bis zu 5 µg/ml, mehr bevorzugt bis zu 2 g/ml. Die Transportlösung kann weiterhin Fungizide, wie beispielsweise Amphotericin B, enthalten, und zwar vorzugsweise in einer Menge von mindestens 50 µg/ml, mehr bevorzugt mindestens 100 µg/ml und bis zu 2 g/ml, mehr bevorzugt bis zu 1 g/ml und noch mehr bevorzugt bis zu 500 µg/ml.

Die Zähne lagern vorzugsweise in der Transportflüssigkeit bei einer Temperatur von 2 bis 10 °C, insbesondere von 3 bis 5 °C, z.B. für ein bis drei Tage (24 bis 72 Stunden), und werden gegebenenfalls zum Einfrier/Lagerungsort transportiert.

Danach werden die Zähne vorzugsweise schrittweise in die Einfrierlösung überführt, beispielsweise unter Laminar Air Flow-Bedingungen. Dazu wird beispielsweise die Transportflüssigkeit dekantiert und die Zähne werden dann in Röhrchen mit der Einfrierlösung umgefüllt. In einer besonders bevorzugten Ausführungsform erfolgt dabei eine Adaption an die vorgesehene Konzentration an Kryoprotektant in der Einfrierlösung, indem die Zähne nacheinander mit Einfrierlösungen mit steigenden Mengen an Kryoprotektant versehen werden. So können die Zähne zunächst mit einer Einfrierlösung, welche noch kein Kryoprotektant enthält, versehen werden und dann nacheinander, beispielsweise in zeitlichen Abständen von 10 bis 20 Minuten, mit Lösungen, welche steigende Mengen an Kryoprotektant, beispielsweise zunächst 2 bis 3 Gew.-% Kryoprotektant, dann 4 bis 6 Gew.-% Kryoprotektant, dann 6 bis 8 % Kryoprotektant und schließlich die zur Einfrierung vorgesehene Menge an Kryoprotektant, beispielsweise 10 Gew.-%, enthalten.

Danach folgt das Einfrieren und Einlagern der Zähne, wie hierin beschrieben.

Sobald der Zahn zu einem späteren Zeitpunkt wieder benötigt wird, folgt ein Auftauen des Zahns. Für die Wiederverwendung des Zahns wird das Röhrchen vorzugsweise in warmes Wasser, beispielsweise in 30 bis 40 °C warmes Wasser, gestellt. Nach wenigen Minuten ist die Einfrierflüssigkeit aufgetaut und der Zahn freigegeben. Die Einfrierflüssigkeit kann dekantiert werden und der Zahn gespült werden. Bevorzugt wird der Zahn mit einer intraoperativen Lösung behandelt, welche beispielsweise 10 ml Kochsalzlösung, insbesondere physiologische Kochsalzlösung (0,9 %ig), 5 bis 20 mg, insbesondere 10 mg Hydrocortisonlösung sowie 10 bis 200 mg, insbesondere 100 mg Tetracyclin, enthält. Nach einer Lagerung in dieser intraoperativen Lösung für etwa 5 bis 10 Minuten kann der Zahn beim Patienten eingesetzt werden.

Das erfindungsgemäße Verfahren weist beträchtliche Vorteile gegenüber herkömmlichen Kryopräservationsverfahren und auch gegenüber der Verwendung von enossalen Zahnimplantaten auf.

So ist durch die hohe Lagerungstemperatur der apparative Aufwand sehr gering und die mit dem Verfahren verbundenen Kosten können niedrig gehalten werden. Autogene oder autologe Zahntransplantate haben weiterhin eine gute Prognose und sind auch für Jugendliche geeignet. Da erfindungsgemäß der Zahnpulpeninhalt miteingelagert werden kann, weisen die Zähne bei Replantation ein hervorragendes osteoinduktives Potenzial auf. Dies ermöglicht eine Replantation auch bei Patienten, bei denen vor einer enossalen Zahnimplantation ein Knochenaufbau notwendig wäre. Weiterhin besteht die Möglichkeit vor einer enossalen Zahnimplantation durch die Transplantation eines eigenen Zahns in ein Gebiet geringen Knochenangebots das Knochenangebot zunächst zu verbessern, so dass zu einem späteren Zeitpunkt eine relativ unkomplizierte Implantation erfolgen kann.

Da bei der erfindungsgemäßen Zahnbank vorzugsweise ausschließlich eine autogene oder autologe Transplantation in das gleiche Individuum vorgesehen ist, ist die Anforderung an mikrobiologische Tests, beispielsweise auf Hepatitis A, Hepatitis B, Hepatitis C, HIV oder BSE, wenig relevant. Technische oder humanbiologische Risiken treten somit nicht auf. Eine autogene oder autologe Transplantation weist auch hohe 10-Jahres-Erfolgsraten (von ca. 84 %) auf.

Der Patient kann weiterhin vorteilhafterweise mit seinen körpereigenen Zähnen wieder hergestellt werden. Die autogenen oder autologen Zahntransplantate weisen einen aufbauenden Effekt auf die umliegenden Gewebe und die Knochen auf. Dadurch wird nach Zahntransplantation der umliegende Knochen aufgebaut. Bei möglichem späteren Verlust des transplantierten Zahns kann dann eine Implantation ohne die Notwendigkeit der sonst erforderlichen Knochen aufbauenden Maßnahmen durchgeführt werden. Im Gegensatz dazu sind nach Verlust eines enossalen Implantats in der Regel aufgrund des entstandenen Defekts immer Knochen aufbauende Maßnahmen erforderlich. Die autogene oder autologe Transplantation ist zudem eine Methode, die insbesondere bei Jugendlichen mit noch wachsendem Gebiss vorteilhaft angewendet werden kann, da das umgebende Gewebe weiter mitwachsen kann. Im Gegensatz dazu kommt es bei enossaler Implantation im wachsenden Gebiss zu einem Wachstumsstop im Implantatbereich.

Aus diesem Grunde stellt die Implantation von enossalen Implantaten bei Jugendlichen eine medizinische Kontraindikation dar und unterstreicht die Bedeutung der autogenen Zahntransplantation für dieses Patientenklientel.

Die Erfindung wird durch die beigefügten Figuren und die folgenden Beispiele weiter erläutert.

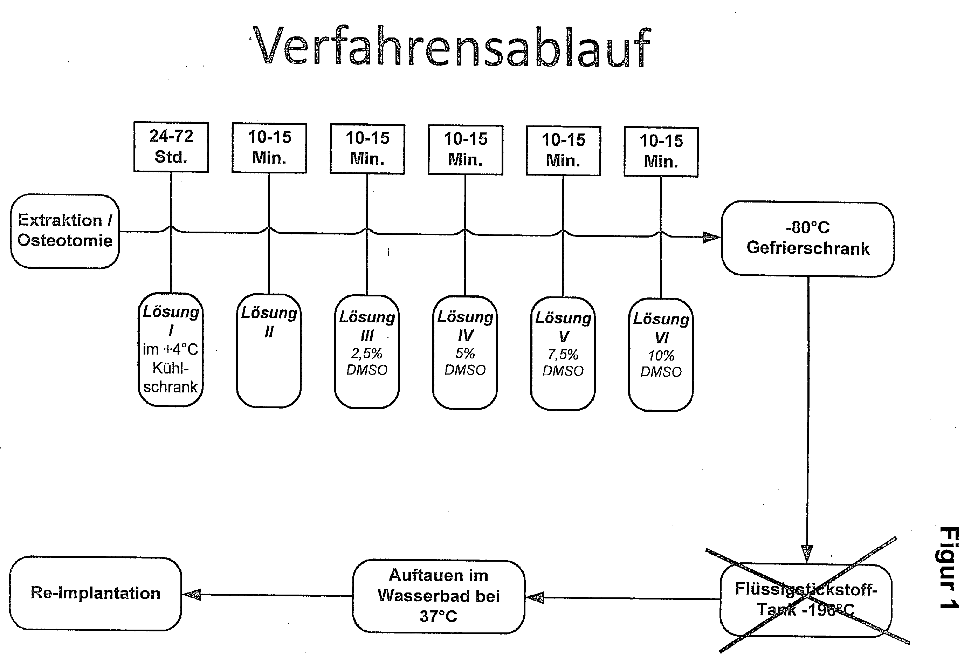

Figur 1 zeigt einen bevorzugten Verfahrensablauf mit allen Schritten von der Extraktion von Zähnen bis zur Replantation.

### Beispiel 1

### Lösungen

### 1.1 Transportflüssigkeit

Eine Transportflüssigkeit wird erstellt durch Anreicherung von Medium 199 mit 10 Gew.-% humanem Serumalbumin, 4 bis 6 Gew.-% Natriumbicarbonat, 1000 µg/ml Antibiotika, nämlich Penicillin, Cephaloridin und Gentamycin sowie 200 µg/ml Fungizid, nämlich Amphotericin B. Die Lösung wird zur weiteren Verwendung steril filtriert.

Optional wird dieser Transportlösung weiterhin Hydrocortison oder/und Tetracyclin zugegeben.

### 1.2 Einfrierflüssigkeit

Medium 199 wird mit 20 Gew.-% humanem Serumalbumin, 4 bis 6 Gew.-% Natriumbicarbonat sowie 1000 µg/ml Antibiotika, insbesondere Penicillin und/oder Streptomycin, angereichert und steril filtriert.

Optional wird dieser Einfrierflüssigkeit Hydrocortison oder/und Tetracyclin zugesetzt.

Ausgehend von der Grundeinfrierlösung werden adaptive Lösungen mit steigendem Kryoprotektantengehalt hergestellt, zu denen 2,5 Gew.-%, 5 Gew.-%, 7,5 Gew.-% und 10 Gew.-% DMSO hinzugefügt werden.

### Beispiel 2

### Verfahrensablauf

Die Zähne wurden durch schonende Osteotomie entfernt, wobei darauf geachtet wurde, dass die Zahnoberfläche durch die Schleifkörper nicht verletzt wird. Nach schonender Entfernung wird der noch in der Extraktionszange befindliche Zahn mit 0,9 %-iger steriler NaCl-Lösung abgespült und in ein steriles 50 ml Röhrchen der Firma Greiner-Bio-One gegeben. Es erfolgt die Beschriftung des Röhrchens mit Initialen von Nachname und Vorname, Geburtsdatum, Zahnnummer, fortlaufender Zahnbank-Nummer sowie Tag der Einlagerung im Gefrierschrank. Die Zähne lagern dann in der Transportlösung (siehe Beispiel 1.1) bei 4 °C für 1 bis 3 Tage im Kühlschrank. Nach dieser Zeit wurden die Zähne schrittweise unter Laminar Air Flow-Bedingungen in die Einfrierlösung (siehe Beispiel 1.2), zunächst ohne Kryoprotektant, umgefüllt. Dies erfolgte, indem die Transportlösung dekantiert wird und die Zähne dann mit Einfrierlösung versetzt werden. Danach erfolgte ein stetiger Wechsel in 15-minütigen Abständen mit Einfrierlösungen mit steigendem Gehalt an Kryoprotektant, bis die Zähne schließlich in einer Einfrierlösung enthaltend 10 Gew.-% DMSO umgefüllt waren. Das Röhrchen wird nun in einen Gefrierschrank gegeben. Zum Einfrieren der Zähne wird zunächst langsam bei -1 °C Abkühlung pro Minute bis zu -40 °C gekühlt. Die weitere Abkühlung von -40 °C bis -84 °C erfolgte bei einer Abkühlrate von -6 °C pro Minute. Die Einlagerung der Zähne ist damit beendet.

Zum Zeitpunkt der Wiederverwendung der Zähne wird das Röhrchen in 37 °C warmes Wasser gestellt. Nach ca. 10 Minuten ist die Flüssigkeit aufgetaut und der Zahn freigegeben. Die Einfrierlösung kann abdekantiert werden. Anschließend wird der Zahn in einer intraoperativen Lösung bestehend aus 10 ml 0,9 %-iger Kochsalzlösung, 10 mg Hydrocortisonlösung sowie 100 mg Tetracyclin für 5 bis 10 Minuten gelagert. Anschließend kann der Zahn beim Patienten transplantiert werden.

### Beispiel 3

### Bakterienkontamination von kryopräservierten Zähnen

20 Zähne wurden, wie in Beispiel 2 beschrieben, kryopräserviert. Anschließend wurde die Bakterienzahl bestimmt. In allen 20 Fällen wurde kein aerobes Wachstum festgestellt, was zeigt, dass keinerlei Bakterien vorhanden waren. In zwei Proben fanden sich geringe Anteile an Pilzen, welche in der körpereigenen Mundflora heimisch sind (Candida parapsilosis sowie Candida guilliermondii).

## Patentansprüche

1. Verfahren zur Kryopräservation von humanen Zähnen umfassend die Schritte
(i) Versetzen des Zahns mit einem Medium, welches ein Antibiotikum, ein Kryoprotektant, Serumproteine und einen Puffer umfasst,
(ii) Einfrieren,
(iii) Lagern des eingefrorenen Zahns bei einer Temperatur von -20 °C bis -88 °C.

2. Verfahren nach Anspruch 1,
**dadurch gekennzeichnet,**
**dass** die Lagerung bei einer Temperatur von -70 °C bis -86 °C erfolgt.

3. Verfahren nach einem der vorhergehenden Ansprüche,
**dadurch gekennzeichnet,**
**dass** die Lagerung in Schritt (iii) für mindestens eine Woche, insbesondere für mindestens drei Monate, erfolgt.

4. Verfahren nach einem der vorhergehenden Ansprüche,
**dadurch gekennzeichnet,**
**dass** als Antibiotikum Penicillin, Cephaloridin, Gentamycin oder/und Streptomycin verwendet wird.

5. Verfahren nach einem der vorhergehenden Ansprüche,
**dadurch gekennzeichnet,**
**dass** als Kryoprotektant DMSO verwendet wird.

6. Verfahren nach einem der vorhergehenden Ansprüche,
**dadurch gekennzeichnet,**
**dass** als Serumproteine humanes Serumalbumin oder/und Kälberserum verwendet wird.

7. Verfahren nach einem der vorhergehenden Ansprüche,
**dadurch gekennzeichnet,**
**dass** als Puffer Natriumbicarbonat verwendet wird.

8. Verfahren nach einem der vorhergehenden Ansprüche,
**dadurch gekennzeichnet,**
**dass** eine Adaption an die vorgesehene Konzentration an Kryoprotektant durchgeführt wird.

9. Verfahren nach einem der vorhergehenden Ansprüche,
**dadurch gekennzeichnet,**
**dass** das Einfrieren in Schritt (ii) zunächst bis zu einer Temperatur im Bereich von -30 °C bis -50 °C mit einer Abkühlrate von -0,5 °C bis -2 °C pro Minute durchgeführt wird und dann weiter bis zur Lagertemperatur im Bereich von -70 °C bis -88 °C mit einer Abkühlrate von -4 °C bis -8 °C pro Minute durchgeführt wird.

10. Verfahren nach einem der vorhergehenden Ansprüche, weiterhin umfassend den Schritt
a) Waschen des Zahns mit einer Lösung,
wobei Schritt a) vor den Kryopräservationsschritten (i) - (iii) durchgeführt wird.

11. Verfahren nach einem der vorhergehenden Ansprüche, weiterhin umfassend den Schritt
b) Versetzen des Zahns mit einer Transportflüssigkeit umfassend einen Puffer und/oder Antibiotika,
wobei Schritt b) vor den Kryopräservationsschritten (i) - (iii) und gegebenenfalls nach dem Waschschritt a) durchgeführt wird.

12. Verfahren nach einem der vorhergehenden Ansprüche, weiterhin umfassend den Schritt
iv) Auftauen des Zahns.

13. Verfahren nach einem der vorhergehenden Ansprüche, weiterhin umfassend den Schritt
v) Entfernen des Kryoprotektants.

14. Zahnbank umfassend wenigstens einen eingefrorenen Zahn, welcher gemäß dem Verfahren nach einem der Ansprüche 1 bis 13 kryopräserviert ist.

15. Zahnbank nach Anspruch 14 zur autogenen oder autologen Replantation des kryopräservierten Zahnes.

## Claims

1. Method for cryopreserving human teeth, comprising the steps of
(i) admixing the tooth with a medium comprising an antibiotic, a cryoprotectant, serum proteins and a buffer,
(ii) freezing,
(iii) storing the frozen tooth at a temperature of from -20°C to -88°C.

2. Method according to Claim 1,
**characterized in that**
the storage is carried out at a temperature of from -70°C to -86°C.

3. Method according to either of the preceding claims,
**characterized in that**
the storage in step (iii) is carried out for at least one week, especially for at least three months.

4. Method according to any of the preceding claims,
**characterized in that**
the antibiotic used is penicillin, cephaloridine, gentamicin and/or streptomycin.

5. Method according to any of the preceding claims,
**characterized in that**
the cryoprotectant used is DMSO.

6. Method according to any of the preceding claims,
**characterized in that**
the serum proteins used are human serum albumin and/or calf serum.

7. Method according to any of the preceding claims,
**characterized in that**
the buffer used is sodium bicarbonate.

8. Method according to any of the preceding claims, **characterized in that**
an adjustment to the intended concentration of cryoprotectant is carried out.

9. Method according to any of the preceding claims,
**characterized in that**
the freezing in step (ii) is firstly carried out up to a temperature within the range from -30°C to -50°C with a cooling rate of from -0.5°C to -2°C per minute and is then further carried out up to the storage temperature within the range from-70°C to -88°C with a cooling rate of from -4°C to -8°C per minute.

10. Method according to any of the preceding claims, additionally comprising the step of
a) washing the tooth using a solution,
with step a) being carried out before cryopreservation steps (i) - (iii).

11. Method according to any of the preceding claims, additionally comprising the step of
b) admixing the tooth with a transport liquid comprising a buffer and/or antibiotics,
with step b) being carried out before cryopreservation steps (i) - (iii) and optionally after wash step a).

12. Method according to any of the preceding claims, additionally comprising the step of
iv) thawing the tooth.

13. Method according to any of the preceding claims, additionally comprising the step of
v) removing the cryoprotectant.

14. Tooth bank comprising at least one frozen tooth which has been cryopreserved in accordance with the method according to any of Claims 1 to 13.

15. Tooth bank according to Claim 14 for the autogenous or autologous replantation of the cryopreserved tooth.

## Revendications

1. Procédé de cryoconservation de dents humaines, comprenant les étapes suivantes :
(i) le mélange de la dent avec un milieu qui comprend un antibiotique, un cryoprotecteur, des protéines sériques et un tampon,
(ii) la congélation,
(iii) le stockage de la dent congelée à une température de -20 °C à -88 °C.

2. Procédé selon la revendication 1, **caractérisé en ce que** le stockage a lieu à une température de -70 °C à -86 °C.

3. Procédé selon l'une quelconque des revendications précédentes, **caractérisé en ce que** le stockage à l'étape (iii) a lieu pendant au moins une semaine, notamment pendant au moins trois mois.

4. Procédé selon l'une quelconque des revendications précédentes, **caractérisé en ce que** la pénicilline, la céphaloridine, la gentamycine et/ou la streptomycine sont utilisées en tant qu'antibiotique.

5. Procédé selon l'une quelconque des revendications précédentes, **caractérisé en ce que** le DMSO est utilisé en tant que cryoprotecteur.

6. Procédé selon l'une quelconque des revendications précédentes, **caractérisé en ce que** l'albumine sérique humaine et/ou du sérum de veaux sont utilisés en tant que protéines sériques.

7. Procédé selon l'une quelconque des revendications précédentes, **caractérisé en ce que** le bicarbonate de sodium est utilisé en tant que tampon.

8. Procédé selon l'une quelconque des revendications précédentes, **caractérisé en ce qu'**une adaptation est réalisée à la concentration prévue en cryoprotecteur.

9. Procédé selon l'une quelconque des revendications précédentes, **caractérisé en ce que** la congélation à l'étape (ii) est réalisée tout d'abord jusqu'à une température dans la plage allant de -30 °C à -50 °C à une vitesse de refroidissement de -0,5 °C à -2 °C par minute, puis ensuite jusqu'à la température de stockage dans la plage allant de -70 °C à -88 °C à une vitesse de refroidissement de -4 °C à -8 °C par minute.

10. Procédé selon l'une quelconque des revendications précédentes, comprenant en outre l'étape suivante :
a) le lavage de la dent avec une solution,
l'étape a) étant réalisée avant les étapes de cryoconservation (i) à (iii).

11. Procédé selon l'une quelconque des revendications précédentes, comprenant en outre l'étape suivante :
b) le mélange de la dent avec un liquide de transport comprenant un tampon et/ou des antibiotiques,
l'étape b) étant réalisée avant les étapes de cryoconservation (i) à (iii) et éventuellement après l'étape de lavage a).

12. Procédé selon l'une quelconque des revendications précédentes, comprenant en outre l'étape suivante :
iv) la décongélation de la dent.

13. Procédé selon l'une quelconque des revendications précédentes, comprenant en outre l'étape suivante :
v) l'élimination du cryoprotecteur.

14. Banque dentaire comprenant au moins une dent congelée, qui est cryoconservée par le procédé selon l'une quelconque des revendications 1 à 13.

15. Banque dentaire selon la revendication 14, pour la réimplantation autogène ou autologue de la dent cryoconservée.
